# FASCICULE DE BREVET EUROPEEN

(11) **EP 2 692 117 B1**
(45) Date de publication et mention de la délivrance du brevet: **22.02.2017**
(21) Numéro de dépôt: 12718288.9
(22) Date de dépôt: 30.03.2012
(51) Int. Cl.: H04L 29/08, G06F 17/30, H04L 12/26, H04L 12/28, H04L 29/06, H04L 29/12, H04N 7/00, H04L 29/14, H04N 21/00

(54) **SUBSTITUTION D'UN OU PLUSIEURS SERVEURS DE CONTENUS PAR UN SERVEUR DE SUBSTITUTION**
ERSATZ VON EINEM ODER MEHREREN INHALTSSERVERN MIT EINEM ERSATZ-SERVER
REPLACEMENT OF ONE OR MORE CONTENT SERVERS WITH A REPLACEMENT SERVER

(30) Priorité: 31.03.2011 FR 1152756
(43) Date de publication de la demande: 05.02.2014
(73) Titulaire: Orange, 75015 Paris (FR)
(72) Inventeur: AGRO, Roberto, F-92340 Bourg la Reine (FR); VINCENT, Yoannn, F-94230 Cachan (FR); GUAZZETTI, Manuel, F-78220 Viroflay (FR)
(74) Mandataire: Cabinet Plasseraud
(86) Numéro de dépôt international: PCT/FR2012/050699
(87) Numéro de publication internationale: WO 2012/131276

(56) Documents cités:
- US-A1- 2003 046 703
- US-A1- 2004 193 609
- US-A1- 2005 138 137
- Chen et al.: "A content directory management method of distributed UPnP media servers", , 17 juillet 2008 (2008-07-17), pages 1-5, XP055012394, Extrait de l'Internet: URL:http://nguyendangbinh.org/Proceedings/ IPCV08/Papers/PDP3384.pdf [extrait le 2011-11-17] -& US 2009/287652 A1 (CHEN CHI-CHUN [TW] ET AL) 19 novembre 2009 (2009-11-19)
- UPNP FORUM: "UPnP Device Architecture 1.1", INTERNET CITATION, 15 October 2008 (2008-10-15), pages 1-129, XP002521470, Retrieved from the Internet: URL:http://www.upnp.org/specs/arch/UPnP-ar ch-DeviceArchitecture-v1.1.pdf [retrieved on 2008-10-15]

## Description

L'invention concerne le domaine des serveurs de contenus numériques, et plus particulièrement, un procédé de substitution d'un serveur de contenus par un serveur de substitution et un serveur de substitution associé.

Dans ce domaine, il existe des dispositifs de stockage à accès partagé, de type NAS (Network Attached Storage) par exemple, qui permette de stocker des contenus numériques multimédias et de les mettre à disposition de différents équipements connectés au même réseau que le dispositif de stockage. Un tel dispositif comporte par exemple un serveur de contenus, conforme au standard UPnP et/ou DLNA, appelé "Digital Media Server" ou DMS dans ce standard.

Dans l'hypothèse où un utilisateur acquiert et installe dans un équipement de ce réseau un deuxième DMS, par exemple un deuxième DMS plus évolué que le premier DMS déjà connecté, il se verra obligé de gérer deux DMS sur son réseau.

En outre, l'utilisateur ne pourra bénéficier, pour les contenus référencés par le premier DMS, des évolutions fonctionnelles présentes dans le deuxième DMS.

Le document intitulé « Acontent directory management method of distributed UPnP media servers » du 17 juillet 2008, par Chen et al décrit une solution pour simplifier la recherche de contenus qui repose sur un serveur de contenus maître qui collecte des informations sur les contenus référencés par des serveurs de contenus exclaves. Le point de contrôle UPnP peut donc interroger ce dserveur de contenus maître pour accéder à une liste de contenus globale.

De la même manière, la demande de brvet publiée sous le numéro US 2004 / 193609 décrit un service centralisé de référencement de contenus (« Master Content Directory Service ») conçu pour générer, par interrogation périodique des autres services de référencement de contenus présents dans le réseau, une liste globale de contenus accessibles dans le réseau.

La demande de brevet publiée sous le numéro US 2003 / 046703 décrit une solution similaire mettant en oeuvre un module d'agrégation (« agregator module ») qui agrège périodiquement ou de manière continue les métadonnées des contenus stockés sur différentes entités du réseau.

Un des buts de l'invention est de remédier à des problèmes, inconvénients ou insuffisances de l'état de la technique et/ou d'y apporter des améliorations.

L'invention est définie par les revendications indépendantes 1, 11 et 14.

L'invention concerne, selon un premier aspect, un procédé de substitution d'un serveur de contenus par un serveur de substitution connecté à un réseau selon la revendication 1.

Selon l'invention, lorsqu'un serveur de contenus et un serveur de substitution sont présents dans le réseau, seul le serveur de substitution reste visible par les équipements du réseau. En outre, le serveur de substitution faisant référence aux contenus du serveur de contenus substitué, ceux-ci deviennent accessibles par l'intermédiaire du serveur de substitution. Les fonctionnalités du serveur de substitution sont donc utilisables pour les contenus référencés par le serveur de substitution. Le serveur de substitution se substitue donc au serveur de contenu. Il n'apparaît pas de doublons pour l'utilisateur en ce que le serveur de contenus ainsi substitué se masque lui-même, afin de simuler sa disparition / déconnexion du réseau.

L'invention revient à définir un mécanisme de maître / esclave entre deux serveurs de contenus, l'un disparaissant au profit de l'autre. Le serveur substitué se masque lui-même, sur demande du serveur de substitution ou bien spontanément, par exemple après avoir détecté la présence d'un serveur de substitution.

Selon un mode de réalisation, le procédé de substitution comprend une étape de recherche d'un serveur de contenus présent dans ledit réseau, le premier message étant un message de demande de masquage émis à destination d'un serveur de contenus trouvé lors de l'étape de recherche. Dans ce mode de réalisation, le serveur de substitution se charge lui-même de rechercher les serveurs de contenus présents dans le réseau. Il n'est pas nécessaire en particulier de faire intervenir une autre entité UPnP du réseau, comme par exemple un point de contrôle UPnP (« Control Point »).

Selon un mode de réalisation du procédé de substitution, le premier message est un message d'interrogation d'un serveur de contenu identifié par une adresse fixe. Dans ce mode de réalisation, le serveur de contenu est préalablement identifié au moyen d'une adresse fixe. Il n'est donc pas nécessaire de mettre en oeuvre une phase de recherche de serveur.

Selon un mode de réalisation du procédé de substitution, le premier message est un message de réponse à un message de recherche de serveur de substitution émis par le serveur de contenus à substituer. Ainsi, spontanément, en cas de message de recherche, le serveur de contenus se masque lui-même sans qu'il soit nécessaire d'envoyer un autre message pour déclencher le masquage.

Selon un mode de réalisation, le procédé de substitution comprend lors de l'étape de recherche:
- une étape d'émission à travers un réseau d'un message de recherche de serveur de contenus présent dans ledit réseau;
- une étape de réception d'au moins un message de réponse comprenant un identifiant dudit serveur de contenus et des données de description d'au moins un service mis en oeuvre par ledit serveur de contenus.

Selon un mode de réalisation, le procédé de substitution comprend une étape d'émission à travers un réseau d'un message d'annonce comprenant des données de description d'au moins un service proposé par ledit serveur de substitution, ladite description incluant la description d'au moins un service mis en oeuvre par ledit serveur de contenus.

Le serveur de substitution se déclare comme proposant des services mis en oeuvre par le serveur de contenus substitué : les entités UPnP du réseau peuvent ainsi faire appel aux fonctionnalités de ces services tout en passant par le serveur de substitution. De manière simplifiée pour l'utilisateur, un seul serveur de contenu est vu et utilisé, ce serveur cumulant ses fonctions propres (ses services propres) avec ceux du ou des serveurs substitués.

Selon un mode de réalisation du procédé de substitution, l'étape de référencement comprend une étape d'obtention, par interrogation dudit serveur de contenus, de métadonnées d'au moins un contenu référencé dans un répertoire de contenus dudit serveur de contenus et une étape d'enregistrement des métadonnées obtenues dans le répertoire de contenus du serveur de substitution.

Selon un mode de réalisation, le procédé de substitution comprend
- une étape de mise en oeuvre de moyens de détection de la disparition dudit serveur de contenus configurés pour détecter une absence de réception, pendant un intervalle de temps prédéfini, d'un message ou d'une réponse à un message signalant la présence du serveur de contenus;
- une étape de suppression, dans le répertoire de contenus du serveur de substitution, de métadonnées référençant ledit au moins un contenu en cas de détection de la disparition dudit serveur de contenus.

De cette manière, en cas de disparition du serveur de contenus, le serveur de substitution peut mettre à jour son répertoire de contenus, afin qu'aucune entité UPnP du réseau ne tente d'accéder à des contenus qui ne sont plus accessibles du fait de cette disparition.

Selon un mode de réalisation, le procédé de substitution comprend
- une étape d'envoi audit serveur de contenus d'une demande d'abonnement à au moins une notification signalant une modification du répertoire de contenus du serveur de contenus;
- une étape de réception d'une dite notification et de mise à jour du répertoire de contenus du serveur de substitution à partir de données fournies par ledit serveur de contenus.

Par un mécanisme d'abonnement à des notifications, le serveur de substitution peut ainsi être informé des modifications impactant le répertoire de serveur de contenus substitué. Ainsi, il ne risque pas d'y avoir des erreurs en cas de demande d'accès à un contenu qui ne serait pas référencé de la même manière dans le serveur de contenu masqué et dans le serveur de substitution.

L'invention concerne, selon un deuxième aspect, un serveur de substitution adapté pour être connecté à un réseau, selon la revendication 11.

Les avantages énoncés pour le procédé selon l'invention sont transposables directement au serveur selon l'invention.

Selon un mode de réalisation, le serveur de substitution comprend des moyens d'émission à travers un réseau d'un message de recherche de serveur de contenus à substituer connecté audit réseau.

Selon un mode de réalisation, le serveur de substitution comprend
- des moyens pour modifier une adresse de localisation d'un contenu référencé dans ledit répertoire de contenus en générant une adresse de localisation propre à un format de codage dans lequel ledit contenu est susceptible d'être obtenu auprès du serveur de substitution ;
- des moyens de transcodage pour, en cas de requête d'accès à un contenu localisé par une dite adresse de localisation modifiée, transcoder ledit contenu pour générer un contenu codé dans le format de codage associé à l'adresse de localisation modifiée.

Ainsi, non seulement le serveur de substitution est capable de se substituer à un ou plusieurs serveur de contenus, mais en outre il est capable, de manière transparente pour l'utilisateur de proposer, de manière centralisée, c'est-à-dire par son intermédiaire, une pluralité de formats par contenu qu'il référence. On peut ainsi remédier à l'absence de format de contenu compatible avec une entité du réseau au moyen d'une seule et même entité, représentative potentiellement de tous les serveurs de contenus du réseau et de tous les contenus de ces serveurs.

L'invention concerne, selon un deuxième aspect, un serveur de contenus, configuré pour être substitué par un serveur de substitution selon l'invention. Ce serveur de contenus comprend
- des moyens d'émission d'un message d'annonce par lequel duquel ledit serveur de contenus se déclare absent dudit réseau ;
- des moyens d'envoi au serveur de substitution de métadonnées relatives à au moins un contenu référencé dans un répertoire de contenus dudit serveur de contenus.

Selon un mode de réalisation, ce serveur de contenus comprend en outre des moyens d'émission à travers un réseau d'un message de recherche de serveur de substitution connecté audit réseau.

Plus généralement, le serveur de substitution selon l'invention comprend des moyens de mise en oeuvre des étapes du procédé selon l'invention.

Selon une implémentation préférée, les différentes étapes du procédé selon l'invention sont mises en oeuvre par un logiciel ou programme d'ordinateur, ce logiciel comprenant des instructions logicielles destinées à être exécutées par un processeur de données d'un serveur de contenus et étant conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'informations lisible par un processeur de données, et comportant des instructions d'un programme tel que mentionné ci-dessus. Le support d'informations peut être n'importe quelle entité ou dispositif capable de stocker le programme.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

D'autres buts, caractéristiques et avantages de l'invention apparaîtront à travers la description qui va suivre, donnée uniquement à titre d'exemple non limitatif, et faite par référence aux dessins annexés dans lesquels:
- la figure 1 représente de manière schématique un système de communication intégrant un dispositif selon l'invention;
- la figure 2 représente un organigramme d'un premier mode de réalisation du procédé selon l'invention ;

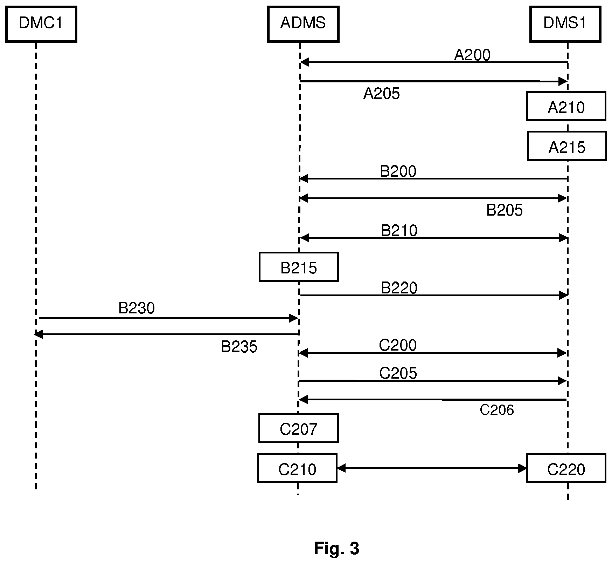

- la figure 3 représente un organigramme d'un deuxième mode de réalisation du procédé selon l'invention.

L'invention est décrite dans le cas de son application à des serveurs de contenus sous forme de serveurs de contenus conformes au standard UPnP et/ou DLNA, appelés "Digital Media Server" ou DMS dans un tel standard. Les contenus concernés sont des contenus numériques, par exemple des contenus multimédia: audio, vidéo, texte, etc.

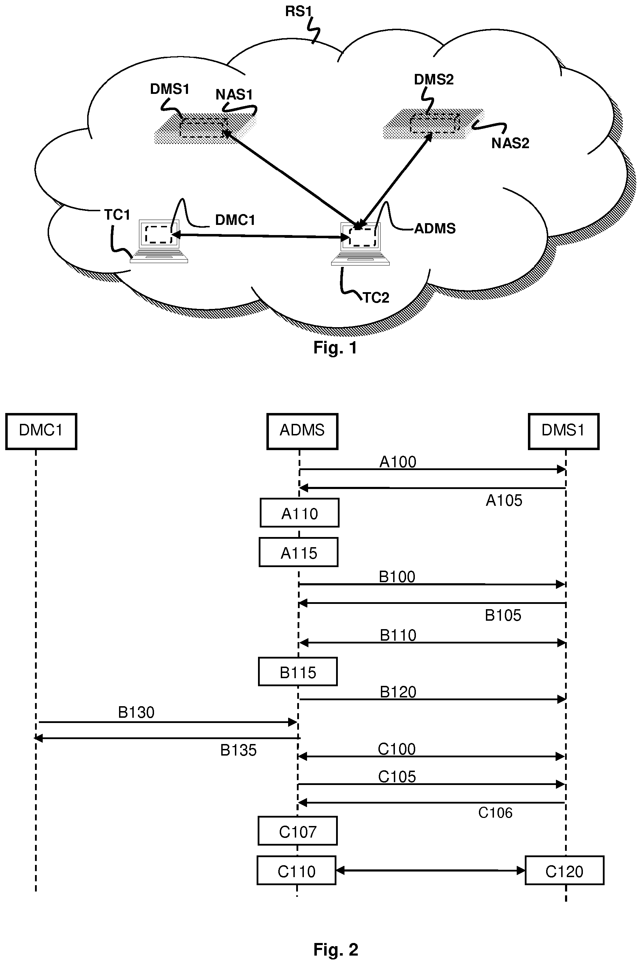

Le système représenté à la figure 1 est organisé autour d'un réseau de communication RS, sous forme par exemple un réseau local (LAN, Local Area Network).

On suppose à titre d'exemple que deux serveurs de contenus DMS1, DMS2, conformes au standard UPnP et/ou DLNA, sont connectés à ce réseau ainsi qu'un autre serveur de contenus ADMS, qui sert de serveur de substitution pour les serveurs de contenus connectés au même réseau que lui.

Dans l'exemple décrit ici, le serveur de substitution ADMS dispose de fonctions avancées par rapport aux serveurs de contenus DMS1 ou DMS2, ou bien d'une plus grande puissance de calcul.

L'invention consiste à masquer le serveur de contenus DMS1 ou DMS2 ou les deux, et à leur substituer le serveur de substitution ADMS, lorsque ce serveur de substitution ADMS est connecté au réseau RS: le serveur de substitution ADMS référence et expose alors les contenus du ou des serveurs de contenus masqués. Le serveur de substitution ADMS est conçu pour se substituer à un nombre quelconque de serveurs de contenus.

Le serveur de substitution ADMS est également un serveur de contenus conforme au standard UPnP et/ou DLNA, et peut donc être utilisé indépendamment de la présence d'autres serveurs de contenus dans le réseau auquel il est connecté. Cependant, lorsque le serveur de substitution ADMS se substitue à un autre serveur de contenus présent dans le réseau, il enrichit l'arborescence des contenus qu'il expose avec les contenus référencés et exposés par le serveur de contenus masqué.

Outre les modules fonctionnels définis pour les serveurs de contenus dans le standard UPnP et/ou DLNA, le serveur de substitution ADMS comprend:
- un module de recherche MR, configuré pour rechercher et détecter la présence de serveur de contenus au sein du réseau auquel est connecté le serveur de substitution ADMS, déterminer si un serveur de contenu trouvé est un serveur à substituer puis pour procéder au masquage du ou des serveurs de contenus détectés,
- un gestionnaire de répertoire CDSM, configuré pour agréger l'arborescence des contenus référencés par le serveur de substitution ADMS avec celle d'un serveur de contenus masqué et obtenir des notifications concernant des événements concernant les contenus référencés par ce serveur de contenu masqué;
- un module de surveillance MS, configuré pour détecter la disparition éventuelle d'un serveur de contenus masqué.

Outre les modules fonctionnels définis pour les serveurs de contenus dans le standard UPnP et/ou DLNA, le serveur de contenus DMS1 comprend un module de masquage MM, configuré pour procéder, suite à la réception d'une telle demande, au masquage du serveur de contenus DMS1, soit après avoir reçu une demande de masquage, soit après avoir détecté la présence dans le réseau d'un serveur de substitution.

Deux modes de réalisation du procédé de substitution sont décrits ci-dessous.

Dans le premier mode de réalisation, c'est le serveur de substitution qui se charge de rechercher des serveurs de contenus présents dans le réseau RS et qui sont à substituer.

Dans le deuxième mode de réalisation, c'est le serveur de contenus à substituer qui se charge de rechercher un serveur de substitution dans le réseau RS.

Ces deux méthodes de recherche peuvent être combinées entre elles afin d'accélérer la détection mutuelle entre un serveur à substituer et un serveur de substitution: dès l'initialisation et la connexion au réseau de l'un quelconque de ces deux serveurs, celui-ci initie une recherche pour détecter la présence de l'autre dans le réseau. De cette manière, dès qu'un serveur se connecte à un réseau, la substitution peut avoir lieu, sans attendre l'écoulement d'une éventuelle temporisation entre deux phases de recherche que le serveur déjà connecté doit mettre en oeuvre.

Chacun de ces deux modes de réalisation comprend :
- une phase A de recherche et de détection, à l'issue de laquelle le serveur de substitution est informé de la présence du serveur de contenus à substituer et vice-versa;
- une phase B de masquage et de substitution, lors de laquelle a lieu la substitution du serveur de contenus à substituer: le serveur de contenus se masque lui-même, le serveur de substitution référence des contenus du serveur de contenus à substituer puis annonce sa présence dans le réseau;
- une phase C de surveillance, au cours de laquelle un dialogue est établi entre le serveur de contenus substitué et le serveur de substitution afin de détecter la disparition de l'un ou de l'autre et de mettre fin au masquage et à la substitution.

### Premier mode de réalisation

### Phase A de recherche et de détection.

Dans le premier mode de réalisation, le serveur de substitution ADMS possède un module de recherche configuré pour détecter la présence dans le réseau RS d'un serveur de contenus, en l'occurrence d'un serveur de contenus UPnP / DLNA ou DMS. Cette détection s'effectue au moyen de requêtes conformes au protocole SSDP (Simple Service Discovery Protocol).

La phase de recherche, comprenant les étapes A100 à A120, est déclenchée à l'initialisation du serveur de substitution ADMS, après la connexion du serveur de substitution ADMS au réseau RS.

A l'étape A100, le module de recherche du serveur de substitution ADMS émet en mode multicast via le réseau RS un message de recherche de serveur de contenus présent dans le réseau RS: ce message de recherche est une requête SSDP "M-SEARCH". Le module de recherche se met ensuite à l'écoute des réponses à cette requête SSDP "M-SEARCH": ces réponses sont émises en mode unicast.

A l'étape A105, suite à l'interception de la requête SSDP "M-SEARCH", le serveur de contenus DMS1 envoie en mode unicast via le réseau RS un message de réponse qui comprend:
- un identifiant du serveur de contenus DMS1 (identifiant UUID, Universal Unique Identifier ou identifiant UDN, Unique Device Name) et
- une description du ou des services UPnP / DLNA mis en oeuvre par le serveur de contenus DMS1.

A l'étape A110, le module de recherche du serveur de substitution ADMS intercepte le message de réponse et identifie le serveur de contenus DMS1 à partir des informations contenues dans ce message de réponse.

Si le serveur de substitution ADMS est initialisé après le serveur de contenus DMS1, le serveur de contenus DMS1 répondra à la requête SSDP comme décrit ci-dessus.

Cependant si le serveur de substitution ADMS est initialisé avant le serveur de contenus DMS1, le module de recherche n'obtiendra pas de réponse à la requête SSDP "M-SEARCH". Dans ce cas, au moment où le serveur de contenus DMS1 sera initialisé, le module de recherche interceptera un message d'annonce SSDP "alive" que le serveur de contenus DMS1 doit envoyer, en mode multicast et de manière périodique, après sa connexion au réseau pour se conformer au mécanisme de découverte prévu dans le standard UPnP / DLNA.

En complément ou en alternative à la réception de message d'annonce SSDP "alive", le serveur de substitution ADMS envoie de manière périodique un message de recherche, afin de détecter la connexion au réseau RS de nouveaux serveurs de contenus.

A l'étape A115, le module de recherche du serveur de substitution ADMS détermine si le serveur de contenus DMS1 est un serveur à substituer. Les étapes des phases B et C décrites ci-dessous ne sont mises en oeuvre qu'en cas de réponse positive à cette étape de détermination.

Selon une première variante de réalisation, la requête SSDP "M-SEARCH" émise à l'étape A100 comprend un paramètre "to be substituted" qui indique le type d'entité recherchée: en l'occurrence que le serveur de substitution ADMS recherche uniquement les serveurs de contenus à substituer et/ou configurés pour pouvoir être substitué. En conséquence, le serveur de substitution ADMS détermine à l'étape A115 qu'il s'agit d'un serveur de contenus qui répond à ce critère de recherche lorsqu'il reçoit une réponse à une requête SSDP "M-SEARCH" avec paramètre "to be substituted".

Le protocole SSDP permet en effet de rechercher des entités selon leur type (ici, le type est serveur de contenus) ou selon leur identifiant (UUID pour Universal Unique Identifier ou UDN pour Unique Device Name). Le paramètre "to be substituted" ainsi ajouté à la requête SSDP sera ignoré par les entités UPnP / DLNA de type DMC ou DMP mais sera interprété et exploité par le serveur de substitution ADMS.

Selon une deuxième variante de réalisation de l'étape A115, cette détermination s'effectue à partir de la réponse à la requête SSDP "M-SEARCH", en déterminant si dans la description du serveur de contenus émettant cette réponse se trouve une propriété "to be substituted" qui indique que le serveur de contenus en question est un serveur de contenus à substituer et/ou configuré pour mettre en oeuvre cette substitution.

En pratique, la réponse à la requête SSDP "M-SEARCH" comprend un lien hypertexte (sous forme d'URL, Uniform Resource Locator) vers un fichier FDMS1 de description (au format XML) du serveur de contenus DMS1 et des services UPnP / DLNA mis en oeuvre par ce serveur de contenus DMS1: le serveur de substitution ADMS charge donc ce fichier et analyse le fichier pour y rechercher la propriété "to be substituted".

En alternative, au lieu de rechercher la propriété "to be substituted", le serveur de substitution ADMS analyse le fichier FDMS1 de description pour y rechercher si l'alias ("friendly name") du serveur de contenus et/ou le nom du modèle ("ModelName") du serveur de contenus et/ou le numéro du modèle ("ModelNumber ") et/ou une autre propriété du serveur de contenus répond à un critère donné indiquant que le serveur de contenus peut être substitué par un serveur de substitution. Dans cette alternative, il n'est pas nécessaire d'ajouter de propriété supplémentaire à la description d'un serveur de contenus.

### Phase B de masquage et de substitution.

La phase de recherche, comprenant les étapes B100 à B120, est déclenchée en cas de réponse positive obtenue à l'étape A115.

A l'étape B100, le serveur de substitution ADMS envoie, au serveur de contenus DMS1 trouvé lors de la phase A de recherche, une demande de masquage afin que le serveur de contenus DMS1 se déclare absent du réseau RS. Cette demande de masquage est envoyée sous forme par exemple une requête UPnP ou bien une requête de type "web service".

A l'étape B105, à réception d'une telle demande de masquage en provenance du serveur de substitution ADMS, le serveur de contenus DMS1 envoie en mode multicast via le réseau RS une requête d'annonce de son départ du réseau, sous forme de requête SSDP "byebye". En outre, le serveur de contenus DMS1 désactive l'envoi en mode multicast de messages d'annonces SSDP "alive" qu'il est censé émettre périodiquement.

A l'étape B110, à réception de la requête SSDP "byebye", le serveur de substitution ADMS obtient, par interrogation du serveur de contenus DMS1 au moyen d'une ou plusieurs requêtes UPnP "Browse", des métadonnées de tout ou partie des contenus référencés dans le répertoire de contenus (CDS, Content Directory service) du serveur de contenus DMS1.

A l'étape B115, le serveur de substitution ADMS référence dans son répertoire de contenus (CDS, Content Directory Service) tout ou partie des contenus référencés par le serveur de contenus DMS1, en enregistrant les métadonnées obtenues à l'étape B110 dans son répertoire de contenus.

A l'étape B120, le serveur de substitution ADMS émet en mode multicast via le réseau RS un message d'annonce, sous forme de message SSDP "alive" signalant la présence du serveur de substitution dans ce réseau. Ce message d'annonce comprend un lien hypertexte vers un fichier FADMS de description (au format XML) du serveur de substitution ADMS et des services UPnP / DLNA proposé par ce serveur de substitution ADMS. Cette description inclut une description d'un ou des services mis en oeuvre par le serveur de contenus, description extraite du fichier FDMS1 de description que le serveur de substitution ADMS a obtenu concernant le serveur de contenus DMS1. En pratique, seules les descriptions des services du serveur de contenus DMS1 qui ne sont pas déjà proposés par le serveur de substitution ADMS sont intégrées dans le fichier FADMS. L'homme du métier comprend donc que, par ce message d'annonce, le serveur de substitution ADMS se déclare en tant que serveur de contenus et indique ses propriétés, comme l'aurait fait un serveur de contenus UPnP conformément au protocole de découverte prévu dans le standard UPnP/DLNA.

Dans le cas où le serveur de contenus substitué propose des services supplémentaires par rapport à ceux proposés par le serveur de substitution, toute requête UPnP, émise par une entité du réseau, à destination du serveur de substitution, qui concerne l'un de ces services supplémentaires, est routée vers le serveur substitué et les réponses à ces requêtes, émises par le serveur substitué sont envoyées par le serveur de substitution à cette entité.

A l'étape B130, le serveur de substitution ADMS reçoit une requête UPnP "Browse" en provenance du point de contrôle DMC1.

A l'étape B135, en réponse à cette requête UPnP "Browse", le serveur de contenus DMS1 envoie des métadonnées de contenus référencés dans le CDS du serveur de substitution ADMS ainsi que des adresses (URL, Uniform Resource Locator) localisant ces contenus, chacune de ces adresses désignant toujours le serveur de substitution ADMS comme entité auprès de laquelle le contenu correspondant est susceptible d'être obtenu.

Alternativement, l'adresse de localisation d'un contenu, susceptible d'être obtenu auprès du serveur de contenus DMS1 et référencé dans le répertoire CDS du serveur de substitution ADMS, est modifiée pour désigner le serveur de substitution ADMS comme entité auprès de laquelle le contenu correspondant est susceptible d'être obtenu. Dans cette alternative cependant, le serveur de substitution devra router les demandes d'accès à un contenu vers le serveur de contenus DMS1 substitué. Par contre, le serveur de substitution ADMS peut grâce à cela proposer un service de transcodage de contenu réalisé comme suit.

Pour chaque contenu (chaque « media item »), le serveur de substitution ADMS fournit une adresse de localisation URL par format de transcodage possible : il modifie une adresse de localisation d'un contenu référencé dans son répertoire de contenus (que ce contenu soit ou non référencé par un serveur de contenus substitué) en générant une adresse de localisation propre à chaque format de codage dans lequel ledit contenu est susceptible d'être obtenu auprès du serveur de substitution. Par exemple pour un contenu audio, le serveur de substitution ADMS fournit :
- une URL pour obtenir le contenu au format MP3,
- une autre URL pour obtenir le contenu au format AAC.

En cas de requête d'accès à un contenu localisé par une adresse de localisation ainsi modifiée, le serveur de substitution ADMS transcode ce contenu pour générer un contenu codé dans le format de codage associé à l'adresse de localisation modifiée.

Lorsque le contenu à transcoder est stocké par un serveur de contenus DMS1 substitué par ce serveur de substitution, le serveur de substitution ADMS obtient, avant transcodage les données du contenu auprès du serveur substitué DMS1, puis transcode à la volée le contenu de manière à modifier le format de codage avant d'envoyer le contenu ainsi transcodé à l'entité UPnP requérant le contenu : DMR ou DMP.

### Phase C de surveillance.

Après exécution de la phase B, le module de recherche du serveur de substitution ADMS notifie le module gestionnaire de répertoire CDSM pour l'informer de la substitution effectuée.

A l'étape C100, le gestionnaire de répertoire CDSM envoie au serveur de contenus DMS1 une demande d'abonnement aux notifications signalant une modification du répertoire de contenus du serveur de contenus, en l'occurrence aux événements "SystemUpdateID" et "ContainerUpdateID" qui servent à signaler des modifications sur le CDS du serveur de contenus DMS1.

A l'étape C105, en cas de réception d'une notification concernant un des événements "SystemUpdateID" et "ContainerUpdateID", le gestionnaire de répertoire CDSM interroge le serveur de contenus DMS1 soit au moyen d'une action UPnP "Browse" ou « Search » envoyée au CDS du serveur de contenus DMS1, soit encore par au moyen d'une requête conforme à un autre protocole. Le gestionnaire de répertoire CDSM obtient en retour à l'étape C106 des informations sur les modifications du CDS du serveur de contenus DMS1 et met à jour son propre CDS avec les informations obtenues.

La phase de mise à jour du CDS du serveur de substitution ADMS (étape C107) consiste à modifier l'arborescence de ce CDS avec les seuls contenus exposés par le serveur de contenus DMS1. Ainsi, le gestionnaire de répertoire CDSM agrège / ajoute tout ou partie des contenus référencés par le serveur de contenus DMS1 aux éventuels contenus exposés par le serveur de substitution ADMS. En outre, le gestionnaire de répertoire CDSM supprime de ce CDS les métadonnées des contenus ayant été supprimés du répertoire du serveur de contenus DMS1.

Les étapes C110 et C120 suivantes sont exécutées en parallèle, l'une par le module de surveillance du serveur de substitution ADMS et l'autre par le module de surveillance du serveur de contenus DMS1.

A l'étape C110, le module de surveillance MS du serveur de substitution ADMS met en oeuvre un processus de surveillance afin de détecter la disparition du serveur de contenus DMS1.

Dans ce but, le module de surveillance MS du serveur de substitution ADMS s'abonne auprès du serveur de contenus DMS1 à des événements de présence, à envoyer en mode unicast sous forme de messages d'annonce SSDP "alive".

Le serveur de contenus DMS1 est configuré pour émettre périodiquement de tels messages d'annonces via le réseau RS. Mais au lieu d'envoyer ces messages d'annonce en mode multicast, ces messages seront envoyés en mode unicast, à destination seulement du module de surveillance MS du serveur de substitution ADMS: ainsi le serveur de contenus DMS1 reste masqué pour toutes les entités UPnP du réseau RS mais signale sa présence au serveur de substitution ADMS, afin que ce dernier soit en mesure de détecter la disparition du serveur de contenus DMS1. En effet, l'équipement mettant en oeuvre le serveur de contenus DMS1 peut être éteint électriquement par un utilisateur ou mis en veille. Il est donc nécessaire que le serveur de substitution ADMS puisse détecter la disparition du serveur de contenus DMS1, c'est-à-dire sa déconnexion du réseau RS.

Le module de surveillance MS met en oeuvre une fonction de détection de cette disparition, qui est configurée pour détecter :
- soit une absence de réception, pendant un intervalle de temps prédéfini, correspondant à la périodicité d'émission des messages d'annonces en mode unicast, d'un message d'annonce SSDP "alive" signalant la présence du serveur de contenus DMS1; et
- soit la réception d'un message d'annonce SSDP "byebye" signalant la disparition du serveur de contenus DMS1.

Sur détection de la disparition du serveur de contenus DMS1, le module de surveillance MS notifie le gestionnaire de répertoire CDSM pour qu'il mette à jour le CDS du serveur de substitution ADMS en supprimant les métadonnées servant à référencer les contenus référencés dans le CDS du serveur de contenus DMS1.

A l'étape C120, le serveur de contenus DMS1 met en oeuvre un processus de surveillance afin de détecter la disparition du serveur de substitution ADMS. Ceci est nécessaire pour que le serveur de contenus puisse, suite à une telle disparition, être à nouveau utilisé directement par les entités de commandes UPnP du réseau RS (DMC et/ou DMP présents) et que les contenus référencés par le serveur de contenus DMS1 soient rendus accessibles.

Dans ce but, le serveur de contenus DMS1 comprend un module de surveillance MS1 configuré pour détecter des messages d'annonce, émis par le serveur de substitution ADMS. Plusieurs variantes de réalisation sont possibles.

Dans une première variante, les messages d'annonce détectés par le module de surveillance MS1 sont des messages d'annonce de départ, sous forme de messages SSDP de type « byebye », émis en mode multicast, qu'un dispositif UPnP doit émettre à sa déconnexion du réseau. Dans cette première variante, le serveur de contenus DMS1 détecte la disparition du serveur de substitution ADMS en cas d'émission d'un message d'annonce « byebye » émis en mode multicast par le serveur de substitution ADMS. Cette première variante n'est pas performante dans le cas où l'équipement incorporant le serveur de substitution ADMS est éteint électriquement sans avoir eu le temps d'envoyer de message d'annonce.

Dans une deuxième variante, les messages d'annonce détectés par le module de surveillance MS1 sont des messages d'annonce de présence, sous forme de messages SSDP de type « alive » qu'un dispositif UPnP émet à intervalle de temps périodique. Dans cette deuxième variante, si le serveur de substitution ADMS n'émet pas de message d'annonce « alive » pendant une durée déterminé, le serveur de contenus DMS1 détecte la disparition du serveur de substitution ADMS. Cette deuxième variante n'est pas performante dans le cas où l'intervalle de temps entre deux émissions de messages d'annonce est trop long : supérieur à 5 ou 10 minutes. En effet, les messages ssdp:alive ou ssdp:bybye sont émis en général toutes les 10 ou 15 mn.

En effet, la détection de la disparition du serveur de substitution ADMS peut se produire avec plusieurs minutes de retard et les contenus du serveur de contenus DMS1 sont pendant ce temps inaccessibles.

Chacun de ces messages d'annonce peut ainsi être remplacé par un message d'appel d'une fonction d'un service Web mis en oeuvre par le serveur de contenus DMS1, qui peut alors détecter une absence d'appel de cette fonction.

Dans une troisième variante, les messages d'annonce détectés par le module de surveillance MS1 sont des messages de réponse, émis conformément à un autre protocole, en réponse à une requête émise périodiquement par le module de surveillance MS1 du serveur de contenus DMS1.

Après émission d'une telle requête, le module de surveillance MS1 déclenche une temporisation de courte durée, par exemple inférieure à 1 minute: si à l'expiration de cette temporisation, le module de surveillance MS1 n'a reçu aucun message de réponse à sa requête, il détecte la disparition du serveur de substitution ADMS. Cette troisième variante permet une détection rapide (à la minute près, si la temporisation est de 1 minute ou inférieure) de la disparition du serveur de substitution ADMS.

Lorsque le serveur de contenus DMS1 a détecté, selon l'une quelconque de ces trois variantes, la disparition du serveur de substitution ADMS, il émet à nouveau un message d'annonce SSDP « alive » en mode multicast pour signaler sa présence auprès des entités de commandes UPnP du réseau RS (DMC et/ou DMP présents. Ces entités peuvent alors piloter directement le serveur de contenus DMS1, sans passer par l'intermédiaire du serveur de substitution. Le serveur de contenus DMS1 réactive alors l'émission périodique des messages d'annonce « ssdp : alive ».

### Deuxième mode de réalisation

### Phase A de recherche et de détection.

Dans le premier mode de réalisation, le serveur de contenus DMS1 possède un module de recherche configuré pour détecter la présence dans le réseau RS d'un serveur de contenus, servant de serveur de substitution. Cette détection s'effectue au moyen de requêtes conformes au protocole SSDP (Simple Service Discovery Protocol).

La phase de recherche, comprenant les étapes A200 à A220, est déclenchée à l'initialisation du serveur de contenus DMS1, après la connexion du serveur de contenus DMS1 au réseau RS.

A l'étape A200, le module de recherche du serveur de contenus DMS1 émet en mode multicast via le réseau RS un message de recherche de serveur de contenus présent dans le réseau RS: ce message de recherche est une requête SSDP "M-SEARCH". Le module de recherche se met ensuite à l'écoute des réponses à cette requête SSDP "M-SEARCH": ces réponses sont émises en mode unicast.

A l'étape A205, suite à l'interception de la requête SSDP "M-SEARCH", le serveur de substitution ADMS envoie en mode unicast via le réseau RS un message de réponse qui comprend :
- un identifiant du serveur de substitution ADMS (identifiant UUID, Universal Unique Identifier ou identifiant UDN, Unique Device Name) et
- une description du ou des services UPnP / DLNA mis en oeuvre par le serveur de substitution ADMS.

A l'étape A210, le module de recherche du serveur de contenus DMS1 intercepte le message de réponse et identifie le serveur de substitution ADMS à partir des informations contenues dans ce message de réponse.

Si le serveur de contenus DMS1 est initialisé après le serveur de substitution ADMS, le serveur de substitution ADMS répondra à la requête SSDP comme décrit ci-dessus.

Cependant si le serveur de contenus DMS1 est initialisé avant le serveur de substitution ADMS, le module de recherche n'obtiendra pas de réponse à la requête SSDP "M-SEARCH". Dans ce cas, au moment où le serveur de substitution ADMS sera initialisé, le module de recherche interceptera un message d'annonce SSDP "alive" que le serveur de substitution ADMS doit envoyer à sa connexion au réseau pour se conformer au mécanisme de découverte prévu dans le standard UPnP / DLNA.

En complément ou en alternative à la réception de message d'annonce SSDP "alive", le module de recherche du serveur de contenus DMS1 envoie de manière périodique un message de recherche, afin de détecter la connexion au réseau RS de nouveaux serveurs de contenus.

A l'étape A215, après avoir reçu un message de réponse ou un message d'annonce SSDP "alive", le serveur de contenus DMS1 détermine si le serveur de substitution ADMS est un serveur servant de serveur de substitution, les étapes des phases B et C décrites ci-dessous n'étant mises en oeuvre qu'en cas de réponse positive à cette étape de détermination.

Selon une première variante de réalisation de l'étape A215, cette détermination s'effectue en ajoutant dans la requête SSDP "M-SEARCH" un paramètre "substitute" qui indique le type d'entité recherchée: cela signifie en l'occurrence que le serveur de contenus DMS1 recherche uniquement les serveurs de contenus configurés pour se substituer à au moins un serveur de contenus. Dans cette variante, un serveur de contenus qui répond à ce critère de recherche est un donc serveur qui émet une réponse à la requête SSDP "M-SEARCH" avec paramètre "substitute".

En effet, le protocole SSDP permet de rechercher des entités selon leur type (ici, le type est serveur de contenus) ou selon leur identifiant (UUID pour Universal Unique Identifier ou UDN pour Unique Device Name). Le paramètre "substitute" ainsi ajouté à la requête SSDP sera ignoré par les entités UPnP / DLNA de type DMC ou DMP mais sera interprété et exploité par le serveur de contenus DMS1.

Selon une deuxième variante de réalisation de l'étape A215, cette détermination s'effectue à partir de la réponse à la requête SSDP "M-SEARCH", en déterminant si dans la description du serveur de contenus émettant cette réponse se trouve une propriété "substitute » qui indique que ce serveur de contenus est un serveur de contenus configuré pour se substituer à au moins un serveur de contenus. En pratique, la réponse à la requête SSDP "M-SEARCH" comprend un lien hypertexte (sous forme d'URL, Uniform Resource Locator) vers un fichier FADMS de description (au format XML) du serveur de substitution ADMS et des services UPnP / DLNA mis en oeuvre par ce serveur de substitution ADMS: le serveur de contenus DMS1 charge donc ce fichier et analyse le fichier pour y rechercher la propriété "substitute".

En alternative, au lieu de rechercher une propriété "substitute", le serveur de contenus DMS1 analyse le fichier FADMS de description pour y rechercher si l'alias ("friendly name") du serveur de contenus et/ou le nom du modèle ("ModelName") du serveur de substitution ADMS et/ou le numéro du modèle ("ModelNumber ") et/ou un autre propriété du serveur de substitution ADMS répond à un critère donné indiquant que le serveur de substitution ADMS est configuré pour se substituer à au moins un serveur de contenus. Dans cette alternative, il n'est pas nécessaire d'ajouter de propriété supplémentaire à la description du serveur de substitution ADMS.

### Phase B de masquage et de substitution.

La phase de recherche, comprenant les étapes B200 à B220, est déclenchée en cas de réponse positive obtenue à l'étape A215. Dans ce mode de réalisation, le serveur de contenus DMS1 ayant trouvé un serveur de substitution lors de l'étape A215 se masque lui-même.

A l'étape B200, le serveur de contenus DMS1 envoie en mode multicast via le réseau RS une requête d'annonce de son départ du réseau, sous forme de requête SSDP "byebye". En outre, le serveur de contenus DMS1 désactive l'envoi en mode multicast de messages d'annonces SSDP "alive" qu'il est censé émettre périodiquement.

A l'étape B205, le serveur de contenus DMS1 notifie le serveur de substitution ADMS de sa présence par envoie d'une requête UPnP ou d'une requête de type « web service ».

A l'étape B210, à réception de cette requête, le serveur de substitution ADMS obtient, par interrogation du serveur de contenus DMS1 au moyen d'une ou plusieurs requêtes UPnP "Browse", des métadonnées de tout ou partie des contenus référencés dans le répertoire de contenus (CDS, Content Directory service) du serveur de contenus DMS1.

Les étapes B215 à B235 suivantes sont identiques aux étapes B115 à B135 décrites ci-dessus dans le cas du premier mode de réalisation. Elles permettent le référencement de contenus référencés par le serveur de contenus DMS1 dans le répertoire de contenus du serveur de substitution ADMS.

### Phase C de surveillance.

La phase de surveillance, comprenant les étapes C200 à C220, est déclenchée en cas de réponse positive obtenue à l'étape A215. Ces étapes sont identiques respectivement aux étapes C100 à C120 décrites ci-dessus pour le premier mode de réalisation.

L'invention a été décrite pour des serveurs de contenu mais est applicable également à d'autres types de dispositifs : par exemple à des dispositifs de restitution DMR (« Digital Media Renderers ») ou des dispositifs d'impression (« Digital Media Printers).

### Exemple d'application de l'invention.

A titre d'exemple, on suppose qu'un équipement du réseau RS est capable de diffuser des flux audiovisuels émis en mode « broadcast » (par exemple des flux conformes à la norme DVB-T) par l'intermédiaire d'un serveur de contenus DMS1 intégré dans cet équipement. Cet équipement possède des tuners DVB-T pour la captation des flux audiovisuels. Le serveur de contenus DMS1 référence une liste de chaînes de télévision dans son répertoire (CDS), à chaque chaîne (1 chaîne = 1 item du CDS) étant associée une URL permettant d'accéder au flux audiovisuel diffusé pour cette chaîne.

Tout équipement UPnP / DLNA compatible avec les formats audio et vidéo des flux DVB-T a la possibilité d'accéder à la liste des chaînes de télévision référencées par le serveur de contenus DMS1 et de restituer une des chaines sélectionnée dans cette liste.

Un autre équipement, intégrant un serveur de substitution ADMS, dispose de capacités nécessaires (disque dur) pour enregistrer des flux audiovisuels référencés et autres contenus. Il présente ainsi la fonction d'enregistreur personnel (PVR, « personal video recorder »). Les contenus enregistrés sur ce disque dur sont référencés dans le répertoire CDS du serveur de substitution ADMS.

Chacun de ces deux serveurs peut être utilisé indépendamment l'un de l'autre. Cependant, quand les 2 serveurs sont présents dans le réseau RS, le mécanisme de substitution décrit dans ce document permettra de présenter à l'utilisateur un serveur unique, le serveur de substitution ADMS, en charge de référencer à la fois les flux TV accessibles via le serveur de contenus DMS1 et les contenus stockés sur le disque dur du serveur de substitution ADMS.

Ainsi, l'utilisateur ne verra qu'un seul serveur de contenus via lequel il aura un accès simplifié aux fonctions de restitution de chaînes de télévision et d'enregistreur personnel.

L'invention a été décrite dans le cas de l'utilisation du protocole SSDP pour la mise en oeuvre des phases A, B ou C. Tout autre protocole est toutefois utilisable : par exemple des envois de requêtes de type Web Service sont envisageables, à l'exception toutefois des étapes B105, B200, B120 et B220 qui doivent utiliser des messages SSDP si l'on veut que des entités UPnP standardisées interprètent correctement les messages d'annonce émis lors de ces étapes et comprennent qu'il s'agit respectivement la disparition du serveur de contenu et l'apparition du serveur de substitution.

La phase A de recherche peut en outre être supprimée si le serveur de contenus à substituer est préalablement identifié par une adresse IP fixe et que le serveur de substitution envoie au démarrage une requête initiale à cette adresse fixe pour déclencher l'opération de masquage de ce serveur de contenu.

## Revendications

1. Procédé de substitution d'au moins un serveur de contenus (DMS1, DMS2) par un serveur de substitution (ADMS) connecté à un réseau, le procédé étant mis en oeuvre par le serveur de substitution (ADMS) et comprenant
- une étape d'émission par le serveur de substitution via le réseau, vers un serveur de contenus à substituer, d'un premier message de requête déclenchant une déclaration d'absence dudit serveur de contenus dudit réseau;
- une étape de référencement dans un répertoire de contenus du serveur de substitution d'au moins un contenu référencé dans un répertoire de contenus dudit serveur de contenus,
- une étape d'émission multicast par le serveur de substitution via le réseau d'un message d'annonce par lequel le serveur de substitution signale sa présence dans le réseau.

2. Procédé de substitution selon la revendication 1, comprenant
- une étape de modification d'une adresse de localisation d'un contenu référencé dans ledit répertoire de contenus en générant une adresse de localisation par format de codage dans lequel ledit contenu est susceptible d'être obtenu auprès d'un serveur de substitution ;
- une étape de transcodage dudit contenu suite à une requête d'accès à un contenu localisé par ladite adresse de localisation modifiée, pour générer un contenu codé dans le format de codage associé à l'adresse de localisation modifiée.

3. Procédé de substitution selon la revendication 1, comprenant une étape de recherche d'un serveur de contenus présent dans ledit réseau, le premier message étant un message de demande de masquage émis à destination d'un serveur de contenus trouvé lors de l'étape de recherche.

4. Procédé de substitution selon la revendication 1, dans lequel le premier message est un message d'interrogation d'un serveur de contenu identifié par une adresse fixe.

5. Procédé de substitution selon la revendication 1, dans lequel le premier message est un message de réponse à un message de recherche de serveur de substitution émis par le serveur de contenus à substituer.

6. Procédé de substitution selon la revendication 3, comprenant lors de l'étape de recherche:
- une étape d'émission à travers ledit réseau d'un message de recherche de serveur de contenus présent dans ledit réseau;
- une étape de réception d'au moins un message de réponse comprenant un identifiant dudit serveur de contenus et des données de description d'au moins un service mis en oeuvre par ledit serveur de contenus.

7. Procédé de substitution selon la revendication 1 ou 5, comprenant une étape d'émission à travers ledit réseau d'un message d'annonce comprenant des données de description d'au moins un service proposé par ledit serveur de substitution, ladite description incluant la description d'au moins un service mis en oeuvre par ledit serveur de contenus.

8. Procédé de substitution selon la revendication 1, dans lequel l'étape de référencement comprend une étape d'obtention, par interrogation dudit serveur de contenus, de métadonnées d'au moins un contenu référencé dans un répertoire de contenus dudit serveur de contenus et une étape d'enregistrement des métadonnées obtenues dans le répertoire de contenus du serveur de substitution.

9. Procédé de substitution selon la revendication 1, comprenant
- une étape de mise en oeuvre de moyens de détection de la disparition dudit serveur de contenus configurés pour détecter une absence de réception, pendant un intervalle de temps prédéfini, d'un message ou d'une réponse à un message signalant la présence du serveur de contenus;
- une étape de suppression, dans le répertoire de contenus du serveur de substitution, de métadonnées référençant ledit au moins un contenu en cas de détection de la disparition dudit serveur de contenus.

10. Procédé de substitution selon la revendication 1 comprenant
- une étape d'envoi audit serveur de contenus d'une demande d'abonnement à au moins une notification signalant une modification du répertoire de contenus du serveur de contenus;
- une étape de réception d'une dite notification et de mise à jour du répertoire de contenus du serveur de substitution à partir de données fournies par ledit serveur de contenus.

11. Serveur de substitution adapté pour être connecté à un réseau, comprenant
- des moyens (MR) d'émission via le réseau, vers un serveur de contenus identifié comme serveur à substituer, d'un premier message de requête commandant audit serveur de contenus de se déclarer absent dudit réseau;
- des moyens (CDSM) de référencement dans un répertoire de contenus du serveur de substitution d'au moins un contenu référencé dans un répertoire de contenus dudit serveur de contenus,
- des moyens (MR) d'émission via le réseau d'un message d'annonce par lequel le serveur de substitution signale sa présence dans le réseau.

12. Serveur de substitution selon la revendication 11, comprenant des moyens d'émission à travers ledit réseau d'un message de recherche de serveur de contenus à substituer connecté audit réseau.

13. Serveur de substitution selon la revendication 11, comprenant
- des moyens pour modifier une adresse de localisation d'un contenu référencé dans ledit répertoire de contenus en générant une adresse de localisation par format de codage dans lequel ledit contenu est susceptible d'être obtenu auprès du serveur de substitution ;
- des moyens de transcodage pour, en cas de requête d'accès à un contenu localisé par ladite adresse de localisation modifiée, transcoder ledit contenu pour générer un contenu codé dans le format de codage associé à l'adresse de localisation modifiée.

14. Serveur de contenus (DMS1, DMS2) d'un réseau, configuré pour être substitué par un serveur de substitution (ADMS) selon la revendication 11, comprenant
- des moyens de réception via le réseau, du serveur de substitution, d'un premier message de requête commandant audit serveur de contenus de se déclarer absent dudit réseau;
- des moyens d'émission via le réseau d'un message d'annonce par lequel ledit serveur de contenus se déclare absent dudit réseau ;
- des moyens d'envoi au serveur de substitution de métadonnées relatives à au moins un contenu référencé dans un répertoire de contenus dudit serveur de contenus.

15. Serveur de contenus selon la revendication 14, comprenant des moyens d'émission à travers le réseau d'un message de recherche de serveur de substitution connecté audit réseau.

## Patentansprüche

1. Verfahren zum Ersatz mindestens eines Inhaltsservers (DMS1, DMS2) durch einen mit einem Netz verbundenen Ersatzserver (ADMS), wobei das Verfahren vom Ersatzserver (ADMS) durchgeführt wird und enthält
- einen Schritt des Sendens einer ersten Anfragemitteilung, die eine Abwesenheitserklärung des Inhaltsservers vom Netz auslöst, durch den Ersatzserver über das Netz zu einem zu ersetzenden Inhaltsserver;
- einen Schritt der Referenzierung mindestens eines in einem Inhaltsverzeichnis des Inhaltsservers referenzierten Inhalts in einem Inhaltsverzeichnis des Ersatzservers,
- einen Schritt des Multicast-Sendens einer Meldemitteilung, durch die der Ersatzserver seine Anwesenheit im Netz signalisiert, durch den Ersatzserver über das Netz.

2. Ersatzverfahren nach Anspruch 1, das enthält
- einen Schritt der Änderung einer Lokalisierungsadresse eines im Inhaltsverzeichnis referenzierten Inhalts durch Erzeugen einer Lokalisierungsadresse durch ein Codierformat, in dem der Inhalt bei einem Ersatzserver erhalten werden kann;
- einen Schritt der Transcodierung des Inhalts nach einem Zugriffsantrag auf einen durch die geänderte Lokalisierungsadresse lokalisierten Inhalt, um einen in dem der geänderten Lokalisierungsadresse zugeordneten Codierformat codierten Inhalt zu erzeugen.

3. Ersatzverfahren nach Anspruch 1, das einen Schritt der Suche eines im Netz vorhandenen Inhaltsservers enthält, wobei die erste Mitteilung eine Mitteilung einer Maskierungsanforderung ist, die an einen Inhaltsserver gesendet wird, der im Suchschritt gefunden wurde.

4. Ersatzverfahren nach Anspruch 1, wobei die erste Mitteilung eine Abfragemitteilung eines Inhaltsservers ist, der durch eine feste Adresse identifiziert wird.

5. Ersatzverfahren nach Anspruch 1, wobei die erste Mitteilung eine Antwortmitteilung auf eine Suchmitteilung eines Ersatzservers ist, die vom zu ersetzenden Inhaltsserver gesendet wird.

6. Ersatzverfahren nach Anspruch 3, das im Suchschritt enthält:
- einen Schritt des Sendens über das Netz einer Suchmitteilung eines im Netz vorhandenen Inhaltsservers;
- einen Schritt des Empfangs mindestens einer Antwortmitteilung, die eine Kennung des Inhaltsservers und Beschreibungsdaten mindestens eines vom Inhaltsserver angewendeten Diensts enthält.

7. Ersatzverfahren nach Anspruch 1 oder 5, das einen Schritt des Sendens über das Netz einer Meldemitteilung enthält, die Beschreibungsdaten mindestens eines vom Ersatzserver angebotenen Diensts enthält, wobei die Beschreibung die Beschreibung mindestens eines vom Inhaltsserver durchgeführten Diensts enthält.

8. Ersatzverfahren nach Anspruch 1, wobei der Referenzierungsschritt einen Schritt des Erhalts, durch Abfrage des Inhaltsservers, von Metadaten mindestens eines in einem Inhaltsverzeichnis des Inhaltsservers referenzierten Inhalts und einen Schritt des Speicherns der erhaltenen Metadaten im Inhaltsverzeichnis des Ersatzservers enthält.

9. Ersatzverfahren nach Anspruch 1, das enthält
- einen Schritt der Anwendung von Einrichtungen zur Erfassung des Verschwindens des Inhaltsservers, die konfiguriert sind, eine Empfangsabwesenheit, während eines vordefinierten Zeitintervalls, einer Mitteilung oder einer Antwort auf eine Mitteilung zu erfassen, die das Vorhandensein des Inhaltsservers signalisiert;
- einen Schritt des Löschens, im Inhaltsverzeichnis des Ersatzservers, von den mindestens einen Inhalt referenzierenden Metadaten im Fall der Erfassung des Verschwindens des Inhaltsservers.

10. Ersatzverfahren nach Anspruch 1, das enthält
- einen Schritt des Sendens an den Inhaltsserver einer Abonnementanforderung mindestens einer Benachrichtigung, die eine Änderung des Inhaltsverzeichnisses des Inhaltsservers signalisiert;
- einen Schritt des Empfangs einer Benachrichtigung und der Aktualisierung des Inhaltsverzeichnisses des Ersatzservers ausgehend von vom Inhaltsserver gelieferten Daten.

11. Ersatzserver, der geeignet ist, mit einem Netz verbunden zu werden, der enthält
- Einrichtungen (MR) zum Senden über das Netz, an einen als zu ersetzender Server identifizierten Inhaltsserver, einer ersten Anfragemitteilung, die dem Inhaltsserver befiehlt, sich vom Netz abwesend zu erklären;
- Einrichtungen (CDSM) zur Referenzierung in einem Inhaltsverzeichnis des Ersatzservers mindestens eines Inhalts, der in einem Inhaltsverzeichnis des Inhaltsservers referenziert ist,
- Einrichtungen (MR) zum Senden über das Netz einer Meldemitteilung, durch die der Ersatzserver sein Vorhandensein im Netz signalisiert.

12. Ersatzserver nach Anspruch 11, der Einrichtungen zum Senden über das Netz einer Suchmitteilung eines mit dem Netz verbundenen zu ersetzenden Inhaltsservers enthält.

13. Ersatzserver nach Anspruch 11, der enthält
- Einrichtungen zur Änderung einer Lokalisierungsadresse eines im Inhaltsverzeichnis referenzierten Inhalts durch Erzeugen einer Lokalisierungsadresse durch ein Codierformat, in dem der Inhalt beim Ersatzserver erhalten werden kann;
- Einrichtungen zur Transcodierung, um im Fall einer Zugriffsanfrage auf einen durch die geänderte Lokalisierungsadresse lokalisierten Inhalt den Inhalt zu transcodieren, um einen im der geänderten Lokalisierungsadresse zugeordneten Codierformat codierten Inhalt zu erzeugen.

14. Inhaltsserver (DMS1, DMS2) eines Netzes, der konfiguriert ist, durch einen Ersatzserver (ADMS) nach Anspruch 11 ersetzt zu werden, der enthält
- Einrichtungen zum Empfang über das Netz, vom Ersatzserver, einer ersten Anfragemitteilung, die dem Inhaltsserver befiehlt, sich vom Netz abwesend zu erklären;
- Einrichtungen zum Senden über das Netz einer Meldemitteilung, durch die der Inhaltsserver sich vom Netz abwesend erklärt;
- Einrichtungen zum Senden an den Ersatzserver von Metadaten bezüglich mindestens eines in einem Inhaltsverzeichnis des Inhaltsservers referenzierten Inhalts.

15. Inhaltsserver nach Anspruch 14, der Einrichtungen zum Senden über das Netz einer Suchmitteilung eines mit dem Netz verbundenen Ersatzservers enthält.

## Claims

1. Method for replacing at least one content server (DMS1, DMS2), with a replacement server (ADMS) connected to a network, the method being implemented by the replacement server (ADMS) and comprising
- a step of transmission, by the replacement server via the network, to a content server to be replaced, of a first request message triggering a declaration of absence of said content server from said network;
- a step of referencing, in a content directory of the replacement server, at least one content, referenced in a content directory of said content server,
- a step of multicast transmission, by the replacement server via the network, of an announcement message by which the replacement server signals its presence in the network.

2. Replacement method according to Claim 1, comprising
- a step of modification of a location address of a content referenced in said content directory by generating a location address by coding format in which said content is likely to be obtained from a replacement server;
- a step of transcoding of said content following a request to access a content located by said modified location address, to generate a content coded in the coding format associated with the modified location address.

3. Replacement method according to Claim 1, comprising a step of searching for a content server present in said network, the first message being a masking request message transmitted to a content server found in the searching step.

4. Replacement method according to Claim 1, in which the first message is a message interrogating a content server identified by a fixed address.

5. Replacement method according to Claim 1, in which the first message is a response message to a replacement server search message transmitted by the content server to be replaced.

6. Replacement method according to Claim 3, comprising, in the searching step:
- a step of transmission, through said network, of a search message for a content server present in said network;
- a step of reception of at least one response message comprising an identifier of said content server and description data of a least one service implemented by said content server.

7. Replacement method according to Claim 1 or 5, comprising a step of transmission, through said network, of an announcement message comprising description data of at least one service offered by said replacement server, said description including the description of at least one service implemented by said content server.

8. Replacement method according to Claim 1, in which the referencing step comprises a step of obtaining, by interrogation of said content server, metadata of at least one content referenced in a content directory of said content server and a step of storage of the metadata obtained in the content directory of the replacement server.

9. Replacement method according to Claim 1, comprising
- a step of implementation of means for detecting the disappearance of said content server configured to detect an absence of reception, during a predefined time interval, of a message or of a response to a message signalling the presence of the content server;
- a step of deletion, in the content directory of the replacement server, of metadata referencing said at least one content in case of detection of the disappearance of said content server.

10. Replacement method according to Claim 1, comprising
- a step of sending, to said content server, of a request for subscription to at least one notification signalling a modification of the content directory of the content server;
- a step of reception of one said notification and of updating of the content directory of the replacement server based on data supplied by said content server.

11. Replacement server suitable for being connected to a network, comprising
- means (MR) for transmitting, via the network, to a content server identified as server to be replaced, a first request message ordering said content server to be declared absent from said network;
- means (CDSM) for referencing, in a content directory of the replacement server, at least one content referenced in a content directory of said content server;
- means (MR) for transmitting, via the network, an announcement message by which the replacement server signals its presence in the network.

12. Replacement server according to Claim 11, comprising means for transmitting, through said network, a search message for a content server to be replaced connected to said network.

13. Replacement server according to Claim 11, comprising
- means for modifying a location address of a content referenced in said content directory by generating a location address by coding format in which said content is likely to be obtained from the replacement server;
- transcoding means, in case of a request to access a content located by said modified location address, for transcoding said content to generate a content coded in the coding format associated with the modified location address.

14. Content server (DMS1, DMS2) of a network, configured to be replaced by a replacement server (ADMS) according to Claim 11, comprising
- means for receiving, via the network, from the replacement server, a first request message ordering said content server to be declared absent from said network;
- means for transmitting, via the network, an announcement message by which said content server is declared absent from said network;
- means for sending, to the replacement server, metadata relating to at least one content referenced in a content directory of said content server.

15. Content server according to Claim 14, comprising means for transmitting, through the network, a search message for a replacement server connected to said network.
